# EUROPÄISCHE PATENTSCHRIFT

(11) **EP 3 592 996 B1**
(45) Veröffentlichungstag und Bekanntmachung des Hinweises auf die Patenterteilung: **26.10.2022**
(21) Anmeldenummer: 18705832.6
(22) Anmeldetag: 18.01.2018
(51) Int. Cl.: F16B 37/06, B23K 35/02, H01R 4/66

(54) **BOLZEN FÜR DIE BEFESTIGUNG VON KOMPONENTEN ODER DEN MASSEANSCHLUSS ELEKTRISCHER ODER ELEKTRONISCHER KOMPONENTEN AN EINE FAHRZEUGKAROSSERIE, BOLZENANORDNUNG MIT BOLZEN UND VERFAHREN ZUR AUSBILDUNG DER BOLZENANORDNUNG**
BOLT FOR FASTENING COMPONENTS, OR THE EARTH CONNECTION OF ELECTRICAL OR ELECTRONIC COMPONENTS, ON A VEHICLE BODY, A BOLT ARRANGEMENT HAVING A BOLT, AND A METHOD FOR FORMING THE BOLT ARRANGEMENT
BOULON POUR FIXER DES COMPOSANTS OU LA BORNE DE MASSE DE COMPOSANTS ÉLECTRIQUES OU ÉLECTRONIQUES À UNE CARROSSERIE DE VÉHICULE, ENSEMBLE BOULON AVEC BOULON ET PROCÉDÉ POUR RÉALISER L'ENSEMBLE BOULON

(30) Priorität: 10.03.2017 DE 102017203984
(43) Veröffentlichungstag der Anmeldung: 15.01.2020
(73) Patentinhaber: Bayerische Motoren Werke Aktiengesellschaft, 80809 München (DE)
(72) Erfinder: BRENNINGER, Gerhard, 84405 Schwindkirchen (DE); ENGELBERGER, Thomas, 84072 Au i.d. Hallertau/Osterwaal (DE); VASOLD, Hannes, 85301 Schweitenkirchen (DE)
(86) Internationale Anmeldenummer: PCT/EP2018/051152
(87) Internationale Veröffentlichungsnummer: WO 2018/162127

(56) Entgegenhaltungen:
- EP-A1- 1 072 352
- DE-A1-102004 050 675
- DE-A1-102008 031 785
- DE-U1- 29 908 831
- DE-U1- 29 911 121

## Beschreibung

Die Erfindung betrifft einen Bolzen für die Befestigung von Komponenten oder den Masseanschluss elektrischer oder elektronischer Komponenten an eine Fahrzeugkarosserie, eine Bolzenanordnung mit Bolzen und ein Verfahren zur Ausbildung der Bolzenanordnung.

Es ist bekannt, an einer Fahrzeugkarosserie Bolzen aufzuschweißen. Die Bolzen werden mit ihrem Fuß mit der Karosserie verschweißt. An ihrem freien Ende weisen sie einen Gewindeabschnitt auf, auf den die zu montierenden Komponenten aufgesteckt werden. Durch Aufschrauben einer Mutter auf den Gewindeabschnitt werden die Komponenten fixiert. Handelt es sich bei den Bolzen um sogenannte Massebolzen, also Bolzen, die eingesetzt werden um elektrische oder elektronische Komponenten im Fahrzeug zu erden, so werden Masseleitungen auf den Bolzen aufgesteckt und zwischen Mutter und einer Kontaktfläche des Massebolzens eingeklemmt, wodurch eine elektrische Kontaktierung erzeugt wird.

Werden Fahrzeugkarosserien aus Stahl gefertigt, so kommen Bolzen aus Stahl zum Einsatz. Im Rahmen des Leichtbaus werden zunehmend Leichtbauwerkstoffe eingesetzt. Bei Fahrzeugen mit Aluminiumkarosserien ist jedoch das Anbringen von Bolzen und insbesondere die Masseanbindung eine Herausforderung. Aufgrund der unterschiedlichen Materialeigenschaften ist ein Aufschweißen von herkömmlichen Stahl-Bolzen auf Aluminium nicht ohne weiteres möglich.

Es ist bereits bekannt, Stahl-Bolzen mittels Reibschweißen auf einem Aluminiumblechabschnitt aufzuschweißen und nachfolgend den Aluminiumblechabschnitt durch ein Lichtbogenschweißen mit der Karosserie oder dem Rahmen des Fahrzeugs zu verschweißen. Dieses Verfahren ist jedoch arbeitsund kostenintensiv und nur in geringem Maße automatisierbar.

Weiterhin ist es bekannt, Massebolzen aus Aluminium zu verwenden. Diese sind zwar problemlos mit einer Aluminiumkarosserie verschweißbar, jedoch ist die Langzeitbeständigkeit der Verschraubung fraglich. Zudem stellen Aluminiumbolzen den elektrischen Kontakt häufig nur unzureichend her, da der Reibwert der Aluminium/Aluminiumverschraubung zwischen Mutter und Bolzen undefiniert ist. Beim Verschrauben einer Aluminiumverschraubung besteht die Gefahr, dass das Aluminium verschweißt. Um dies zu verhindern wird ein Gleitmittel genutzt, dass wiederum den elektrischen Kontakt reduziert. Zudem ist die elektrische Kontaktierung verschlechtert durch die Oxidbildung auf dem Aluminium. Entscheidend für die einwandfreie Funktion von elektrischen und elektronischen Komponenten im Fahrzeug ist jedoch ihre Erdung über zuverlässige Masseverbindungen an die Karosserie.

Aus den Druckschriften DE 299 11 121 U1 und EP 1 072 352 A1 sind zusammengesetzte Schweißbolzen bekannt, die jeweils einen Abschnitt aus Aluminium und einen Abschnitt aus Stahl aufweisen. Die beiden Abschnitte der Schweißbolzen sind durch Reibschweißen miteinander verschweißt. Mit dem Aluminiumabschnitt können die Bolzen auf ein Aluminiumbauteil aufgeschweißt werden. Die Druckschrift DE 299 08 831 U1 zeigt einen weiteren Hybridbolzen mit reibverschweißtem Stahl- und Aluminiumabschnitt, wobei am stahlseitigen Abschnitt eine Verdrehsicherung ausgebildet ist.

Aus den Druckschriften DE 10 2008 031785 A1 und DE 10 2004 050675 A1 sind weiterhin Befestigungsanordnungen für wenigstens einen Kabelschuh an einem Schweißbolzen bekannt.

Es ist daher Aufgabe der vorliegenden Erfindung, eine Möglichkeit aufzuzeigen, wie eine verbesserte Bolzenanordnung und insbesondere ein verbesserter Massekontakt für ein Fahrzeug mit Aluminiumkarosserie großseriengerecht herstellbar ist.

Gelöst wird die Aufgabe durch einen Bolzen nach Patentanspruch 1, eine Bolzenanordnung nach Patentanspruch 5 sowie ein Verfahren nach Patentanspruch 6. Weitere vorteilhafte Ausgestaltungen ergeben sich aus den Unteransprüchen und der nachfolgenden Beschreibung.

Es wird ein Bolzen angegeben mit einem Kopfabschnitt mit Außengewinde, der aus einem Stahlwerkstoff gebildet ist, sowie einem Fußabschnitt. Der Kopfabschnitt stellt mit seinem Außengewinde eine Befestigungsmöglichkeit bereit. Soll der Bolzen als Massebolzen eingesetzt werden, so erfolgt an dem Kopfabschnitt die Kontaktierung mit dem elektrischen Anschlusselement, wie z.B. einem Kontaktschuh eines Massekabels. Das Anschlusselement wird z.B. auf das Außengewinde des Bolzens aufgesteckt werden. Durch Aufschrauben einer Mutter auf das Außengewinde wird das Anschlusselement zwischen der Mutter und einer Kontaktfläche des Kopfabschnitts eingeklemmt und die elektrische Kontaktierung erzielt.

An dem Fußabschnitt erfolgt die Befestigung des Bolzens an der Fahrzeugkarosserie. Erfindungsgemäß ist der Fußabschnitt aus einer Aluminiumlegierung ausgebildet und auf einer Stirnseite mit dem Kopfabschnitt durch eine Reibschweißverbindung stoffschlüssig verbunden. Der Bolzen ist als Schweißbolzen zum Hubzündungsschweißen ausgebildet, wozu er an seiner den Fußabschnitt begrenzenden Stirnseite eine Zündspitze aufweist. Die Stirnseite des Fußabschnitts kann vorzugsweise z.B. kegelförmig ausgebildet sein, wobei die Zündspitze gegenüber dem restlichen Fußabschnitt in Längsrichtung des Bolzens hervorsteht.

Der erfindungsgemäße Hybrid-Bolzen ermöglicht eine artgleiche Schmelzschweißung auf einem Aluminiumbauteil und die Verwendung eines Standard-Schweißverfahrens. Es wird der Aluminiumfuß mit der Aluminiumkarosserie verschweißt. Der Hybrid-Bolzen kann vorzugsweise so gestaltet sein, dass vorteilhafter Weise bereits vorhandene Bolzenschweißvorrichtungen, die bislang zum Hubzündungsschweißen von Stahlbolzen auf Stahlkarosserien verwendet wurden, ohne größere Änderungen auch mit dem erfindungsgemäßen Bolzen und für Aluminiumkarosserien eingesetzt werden können. Die Hybridbolzen können vollautomatisiert über eine herkömmliche Bolzenzuführvorrichtung der Fügestelle zugeführt werden. Der Kopfabschnitt mit Stahlgewinde und Stahl-Kontaktfläche gewährleistet eine dauerhaft feste Verschraubung. Ist der Bolzen in einer Ausgestaltung ein Massebolzen, so ermöglicht der aus einem Stahlwerkstoff ausgebildete Kopfabschnitt eine verbesserte elektrische Kontaktierung und eine dauerhaft feste Vorspannung des Kabelanschlusses mit definiertem Übergangswiderstand.

Gemäß der vorliegenden Erfindung weist der Bolzen stahlseitig und aluminiumseitig jeweils Schlüsselflächen zum Angriff eines Werkzeugs auf. Es können z.B. wenigstens zwei, einander gegenüberliegende Schlüsselflächen an dem Fußabschnitt des Bolzens vorgesehen sein und wenigstens zwei, einander gegenüberliegende Schlüsselflächen an dem Kopfabschnitt angeformt sein. Zur Realisierung der Schlüsselfläche kann der Fußabschnitt umfangsseitig z.B. eine mehrkantige, insbesondere sechskantige, Außenkontur aufweisen, ebenso kann eine mehrkantige, insbesondere sechskantige, Außenkontur an den Kopfabschnitt angeformt sein, z.B. benachbart zum Außengewinde. Das Vorsehen der Schlüsselflächen sowohl an dem aluminiumseitigen Abschnitt als auch an dem stahlseitigen Abschnitt des Bolzens ermöglicht eine einfache und zerstörungsfreie Prüfung der Reibschweißverbindung zwischen Stahl und Aluminiumwerkstoff, insbesondere eine 100 % Prüfung aller Bolzen.

In einer Ausgestaltung kann es vorteilhaft sein, wenn der Fußabschnitts in einem an die Stirnfläche angrenzenden Bereich zylinderförmig ausgebildet ist. Hierdurch lässt sich das Schweißergebnis verbessern, da ein unerwünschtes Auswandern des Lichtbogens verhindert wird, während der Bolzen auf die Karosserie geschweißt wird.

Wird die Masseleitung bzw. der Masseschuh auf das Außengewinde des Kopfabschnitts aufgesteckt und eine Mutter aufgeschraubt, so klemmt die Mutter die Masseleitung gegen eine Kontaktfläche, die durch einen gegenüber dem Außengewinde radial überstehenden Anlageflansch gebildet wird. Vorteilhafter Weise ist die Anlagefläche zumindest teilweise mit einer Rändelung versehen, wodurch eine Verdrehsicherung des Masseanschlusses gewährleistet wird.

Der erfindungsgemäße Bolzen kann mit einfachen Mitteln hergestellt werden. So wird der Bolzen in einer Ausgestaltung hergestellt, indem als Kopfabschnitt ein herkömmlicher Stahl-Bolzen verwendet wird, der mit seiner dem Gewinde abgewandten Stirnseite mit einem Aluminium-Profilabschnitt mit sechseckiger Außenkontur reibverschweißt wird. Der Stahl-Bolzen kann hierbei ein Bolzen sein, wie er herkömmlicher Weise für die Kontaktierung von Stahlkarosserien verwendet wird. Das Außengewinde des Bolzen kann vorzugsweise ein M6, M8 oder M10 Gewinde sein. Der Stahlbolzen kann wahlweise mit einer Oberflächenbeschichtung versehen sein, wie z.B. einer Zinn/Zinkbeschichtung Sn/Zn 70/30, zur Erhöhung der elektrischen Leitfähigkeit und Verbesserung der Schweißfähigkeit. Reibschweißverbindungen zwischen Aluminium- und Stahlwerkstoffen können prozesssicher und mit hohen Verbindungsfestigkeiten ausgeführt werden.

Für den Fußabschnitt kann z.B. ein massives, mehreckiges, z.B. sechseckiges, Standardaluminiumprofil verwendet werden, das abgelängt wird. Die für das Schweißen erforderliche Zündspitze kann z.B. durch Abdrehen der Stirnseite erzeugt werden.

Als Werkstoffe für den Fußabschnitt eignen sich alle schweißbaren Aluminiumlegierungen, z.B. Aluminiumlegierungen mit einem Magnesiumanteil von weniger als 3 Gewichts-% und einem Siliziumanteil von weniger oder gleich 1 Gewichts-%. Insbesondere sind 5000er und 6000er Aluminiumlegierungen geeignet und besonders bevorzugt wird EN AW 6082 verwendet.

In einem Nebenaspekt wird weiterhin eine Bolzenanordnung für die Befestigung einer Komponente oder für den Masseanschluss elektrischer oder elektronischer Komponenten an eine Fahrzeugkarosserie angegeben, mit einem Bolzen mit einem Kopfabschnitt aus einem Stahlwerkstoff mit Außengewinde, und einem Fußabschnitt, der aus einer Aluminiumlegierung ausgebildet ist und mit dem Kopfabschnitt durch eine Reibschweißung stoffschlüssig verbunden ist, und der an einer Stirnseite des Fußabschnitts mittels Hubzündungsschweißen mit einem Aluminiumbauteil, insbesondere einer Aluminiumkarosserie, verschweißt ist. Bei dem Bolzen handelt es sich um den voranstehend beschriebenen erfindungsgemäßen Bolzen, insofern werden dieselben technischen Wirkungen und Vorteile erreicht.

Weiterhin wird ein Verfahren angegeben zur Herstellung einer Kontaktanordnung für den Masseanschluss elektrischer oder elektronischer Komponenten an eine Fahrzeugkarosserie, bei dem ein erfindungsgemäßer Massebolzen an seiner Stirnseite mit einem Aluminiumbauteil und insbesondere einer Aluminiumkarosserie verschweißt wird. Das Verschweißen erfolgt vorzugsweise mittels Hubzündungsschweißen, wobei auch Widerstandsschweißen oder Laserschweißen möglich wäre. Beim Hubzündungsschweißen wird der Bolzen zunächst mit seiner Stirnfläche auf dem Werkstück aufgesetzt. Durch einen Hubmechanismus in der Schweißpistole oder dem Schweißkopf wird der Bolzen dann leicht angehoben und es wird ein Pilotlichtbogen mit geringer Stromstärkte zwischen der Zündspitze und dem Werkstück gezündet. Anschließend erfolgt durch eine Erhöhung der Stromstärke die Zündung des Hauptlichtbogens. Bolzen und Werkstück werden aufgeschmolzen. Nach einer definierten Schweißzeit wird der Bolzen zum Werkstück zurückbewegt und taucht in das entstandene Schmelzbad ein. Der Schweißstrom wird ausgeschaltet und die Schmelze erstarrt und kühlt ab. Bolzen und Werkstück sind stoffschlüssig verbunden.

Bei dem Verfahren wird der voranstehend beschriebene Bolzen verwendet, so dass dieselben technischen Vorteile und Wirkungen erzielt werden, wie für den Bolzen beschrieben.

Die oben beschriebenen Eigenschaften, Merkmale und Vorteile dieser Erfindung sowie die Art und Weise, wie diese erreicht werden, werden klarer und deutlicher verständlich anhand der Zeichnung und im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Im Folgenden werden Ausführungsbeispiele der vorliegenden Erfindung an Hand der beiliegenden Zeichnungen erläutert. Darin zeigen:
- Figur 1: eine Seitenansicht eines beispielhaften Bolzens und
- Figur 2: eine schematische Darstellung einer Bolzenanordnung mit dem Bolzen aus Figur 1.

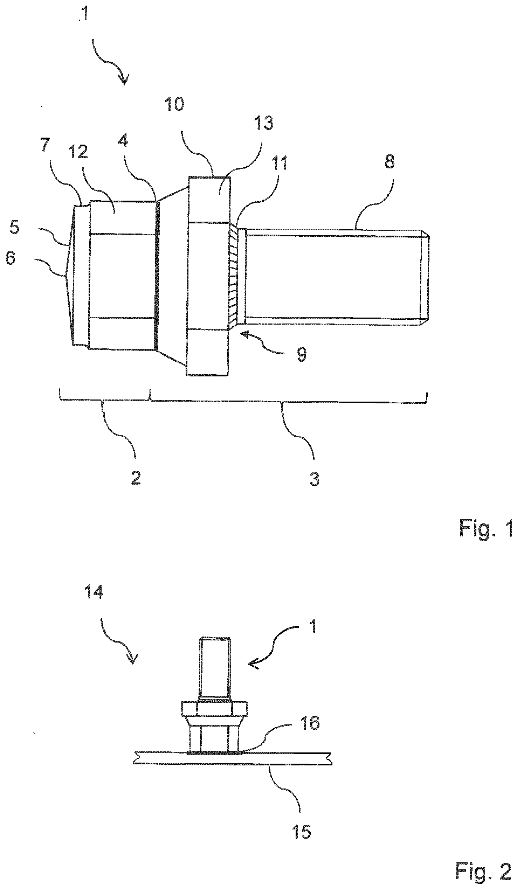

Figur 1 zeigt einen beispielhaften Bolzen in Form eines Massebolzen für den Masseanschluss elektrischer oder elektronischer Komponenten an eine Fahrzeugkarosserie. Der Massebolzen 1 erstreckt sich entlang einer Längsachse L und ist als Hybridbolzen ausgebildet, d.h. er umfasst einen Fußabschnitt 2 aus einem Aluminiumwerkstoff und einen Kopfabschnitt 3 aus einem Stahlwerkstoff. Fußabschnitt 2 und Kopfabschnitt 3 sind durch eine Reibschweißverbindung 4 stoffschlüssig miteinander verbunden.

Der Fußabschnitt 2 dient zur Befestigung des Massebolzens auf einer Fahrzeugkarosserie. Der Fußabschnitt 2 wird durch einen prismenförmigen Körper gebildet mit einer gleichschenkligen sechseckigen Querschnittsfläche (quer zur Längsachse L). An seiner freien Stirnfläche 5 ist der Fußabschnitt 2 kegelförmig ausgebildet mit einer vorstehenden Zündspitze 6. Um ein Auswandern des Lichtbogens beim Aufschweißen des Massebolzens 1 zu verhindern, ist der Fußabschnitt 2 in einem an die Stirnfläche 5 angrenzenden Abschnitt 7 mit einer Anfasung versehen und weist in diesem Bereich eine Zylinderform auf. Der zylinderförmige Abschnitt 7 hat vorzugsweise eine Länge L1 von mindestens 2 mm. Der Fußabschnitt 2 des Massebolzens ist durch einen massiven Aluminiumkörper aus einer schweißbaren Aluminiumlegierung gebildet, wodurch ein prozesssicheres Verschweißen mit einer Aluminiumkarosserie sichergestellt wird.

Der Kopfabschnitt 3 dient zur Montage von nicht gezeigten Masseverbindungen. Hierzu ist an dem Kopfabschnitt ein Außengewinde 8 vorgesehen, auf welches die anzuschließenden Masseverbindungen aufsteckbar sind. Durch Aufschrauben einer nicht dargestellten Mutter auf das Außengewinde 8 des Kopfabschnitts 3 werden die Masseverbindungen an eine Kontaktfläche 9 gepresst und zwischen dieser und der Mutter eingeklemmt. Die Kontaktfläche 9 ist durch einen an Anlageflansch 10 gebildet, der an das Außengewinde 8 angrenzt und gegenüber diesem radial nach außen übersteht. Das Außengewinde 8 und die Kontaktfläche 9 sind aus Stahl ausgebildet, wodurch hervorragende elektrische Kontakteigenschaften und eine dauerhaltbare Verschraubung sichergestellt werden kann. Um eine Verdrehsicherung der Masseleitungen bzw. des aufgesteckten Masseschuhs zu erzielen, kann der Massebolzen 1 im Bereich der Kontaktfläche 9 mit einer Rändelung 11 versehen sein.

Der gezeigte Massebolzen ist auf einfache Art und Weise herstellbar. Der Fußabschnitt 2 kann durch Ablängen eines als Meterware verfügbaren Aluminiumprofils mit sechseckigem Querschnitt erzeugt werden, wobei zumindest an einer Stirnseite, vorzugsweise an beiden Stirnseiten die dargestellte kegelförmige Stirnfläche 5 und die daran anschließende umfangsseitige Fase z.B. durch Drehen erzeugt wird. Die Gesamtlänge L2 des Fußabschnitts 2 ist individuell einstellbar und kann z.B. mindestens 8 mm oder mindestens 10 mm betragen. Der Fußabschnitt 2 wird vorzugsweise mit einer Konversionsbeschichtung (Aludine) versehen, wodurch die Oxidbildung verlangsamt wird und eine definierte Oxidschicht die Schweißbarkeit und Lagerfähigkeit verbessert.

Der so erzeugte Fußabschnitt wird mittels Reibschweißen z.B. an einen herkömmlichen Stahl-Bolzen angeschweißt, wobei der Fußabschnitt mit einer Stirnseite an den Bolzenkopf des Stahl-Bolzens geschweißt wird, so dass der in Figur 1 gezeigte Hybrid-Bolzen entsteht.

Vorzugsweise wird als Stahl-Bolzen ein Bolzen mit Außensechskant verwendet. So werden sowohl auf der Stahlseite als auch auf der Aluminiumseite jeweils Schlüsselflächen 12, 13 bereitgestellt, so dass mittels geeigneter Werkzeuge, wie z.B. Schraubenschlüssel, eine einfache Prüfung der Reibschweißverbindung durch Aufbringen eines Drehmoments möglich ist. Der so hergestellte Massebolzen lässt sich problemlos mittels Hubzündungsschweißen auf Aluminiumkarosserien aufschweißen. Figur 2 zeigt eine beispielhafte Bolzenanordnung 14, wobei der Bolzen 1 aus Figur 1 an seiner Stirnseite 5 mittels eines Hubzündungsschweißens mit einer Aluminiumbauteil 15, das Teil einer Fahrzeugkarosserie ist, verschweißt wurde. Die resultierende Schweißverbindung 16 ist aufgrund des verwendeten Aluminiumfußabschnitts eine artgleiche Schweißung. Der Massebolzen 1 kann problemlos mit herkömmlichen Hubzündungsschweißanlagen mit automatisierten Bolzenzuführvorrichtungen verarbeitet werden

Die Ausführungsbeispiele sind nicht maßstabsgetreu und nicht beschränkend.

### Bezugszeichenliste

- 1: Bolzen
- 2: Fußabschnitt
- 3: Kopfabschnitt
- 4: Reibschweißverbindung
- 5: Stirnfläche der Stirnseite
- 6: Zündspitze
- 7: zylinderförmiger Abschnitt
- 8: Außengewinde
- 9: Kontaktfläche
- 10: Anlageflansch
- 11: Rändelung
- 12, 13: Schlüsselfläche
- 14: Bolzenanordnung
- 15: Aluminiumbauteil
- 16: Hubzündungsschweißverbindung
- L: Längsachse
- L1, L2: Länge

## Patentansprüche

1. Bolzen für die Befestigung einer Komponente oder den Masseanschluss elektrischer oder elektronischer Komponenten an eine Fahrzeugkarosserie, mit
einem Kopfabschnitt (3) mit Außengewinde (8), der aus einem Stahlwerkstoff ausgebildet ist, und
einem Fußabschnitt (2), wobei
der Fußabschnitt (2) aus einer Aluminiumlegierung ausgebildet ist und mit dem Kopfabschnitt (3) durch eine Reibschweißverbindung (4) stoffschlüssig verbunden ist und
der Bolzen (1) als Schweißbolzen zum Hubzündungsschweißen ausgebildet ist, wozu er an seiner den Fußabschnitt (2) begrenzenden Stirnseite (5) eine Zündspitze (6) aufweist,
wobei der Bolzen (1) stahlseitig und aluminiumseitig jeweils Schlüsselflächen (12, 13) zum Angriff eines Werkzeugs aufweist.

2. Bolzen nach Patentanspruch 1,
wobei der Fußabschnitt (2) in einem an die Stirnfläche (5) der Stirnseite angrenzenden Abschnitt (7) zylinderförmig ausgebildet ist.

3. Bolzen nach einem der vorangehenden Patentansprüche,
wobei der Kopfabschnitt (3) des Bolzens (1) gebildet ist durch einen Stahl-Bolzen, der mit seiner dem Außengewinde (8) abgewandten Stirnseite mit einem Aluminium-Profilabschnitt mit sechseckiger Außenkontur reibverschweißt ist.

4. Bolzen nach einem der vorangehenden Patentansprüche,
wobei der Fußabschnitt aus einer 6000-er Aluminiumlegierung ausgebildet ist.

5. Bolzenanordnung für die Befestigung einer Komponente oder den Masseanschluss elektrischer oder elektronischer Komponenten an eine Fahrzeugkarosserie, mit einem Bolzen (1) nach einem der Patentansprüche 1 bis 4, der an der Stirnseite (5) des Fußabschnitts (2) mit einem Aluminiumbauteil (15) mittels Hubzündungsschweißen verschweißt ist.

6. Verfahren zur Herstellung einer Bolzenanordnung für die Befestigung einer Komponente oder für den Masseanschluss elektrischer oder elektronischer Komponenten an eine Fahrzeugkarosserie,
bei dem ein Bolzen (1) nach einem der Patentansprüche 1 bis 4 an seiner Stirnseite (5) mit einem Aluminiumbauteil (15) verschweißt wird.

7. Verfahren nach Patentanspruch 6, wobei der Bolzen mittels Hubzündungsschweißen mit dem Aluminiumbauteil (15) verschweißt wird.

## Claims

1. Stud for fastening a component or the earth connection of electric or electronic components to a vehicle body, having
a head portion (3) with an external thread (8) which is configured from a steel material; and
a foot portion (2); wherein
the foot portion (2) is configured from an aluminium alloy and is connected in a materially integral manner to the head portion (3) by a friction-welded connection (4); and
the stud (1) is configured as a welding stud for drawn arc stud welding, to which end said stud on the end side (5) thereof that delimits the foot portion (2) has an ignition tip (6); wherein
the stud (1) on the steel side and on the aluminium side has in each case spanner flats (12, 13) for engaging a tool.

2. Stud according to Patent Claim 1,
wherein the foot portion (2) in a portion (7) adjacent to the end face (5) of the end side is configured so as to be cylindrical.

3. Stud according to either of the preceding patent claims,
wherein the head portion (3) of the stud (1) is formed by a steel stud which by way of the end side thereof that faces away from the external thread (8) is friction-welded to a profiled aluminium portion having a hexagonal external contour.

4. Stud according to one of the preceding patent claims,
wherein the foot portion is configured from an aluminium alloy of the 6000 series.

5. Stud assembly for fastening a component or the earth connection of electric or electronic components to a vehicle body, having
a stud (1) according to one of Patent Claims 1 to 4, which on the end side (5) of the foot portion (2) by means of drawn arc stud welding is welded to an aluminium component (15).

6. Method for producing a stud assembly for fastening a component or for the earth connection of electric or electronic components to a vehicle body,
in which method a stud (1) according to one of Patent Claims 1 to 4, on the end side (5) thereof, is welded to an aluminium component (15).

7. Method according to Patent Claim 6, wherein the stud is welded to the aluminium component (15) by means of drawn arc stud welding.

## Revendications

1. Goujon destiné à la fixation d'un composant ou au raccordement de masse de composants électriques ou électroniques à une carrosserie de véhicule, ledit goujon comprenant
une portion de tête (3) qui est pourvue d'un filetage extérieur (8) et qui est réalisée à partir d'une matière à base d'acier, et
une portion de pied (2),
la portion de pied (2) étant réalisée à partir d'un alliage d'aluminium et étant reliée à la portion de tête (3) par liaison de matière par soudage à friction (4) et
le goujon (1) étant conçu comme un goujon de soudage destiné au soudage par amorçage par arc, ce pour quoi il comporte une pointe d'amorçage (6) sur son côté frontal (5) qui délimite la portion de pied (2),
le goujon (1) comportant du côté acier et du côté aluminium des surfaces de clavette (12, 13) destinées à l'engagement d'un outil.

2. Goujon selon la revendication 1, la portion de pied (2) étant de forme cylindrique dans une portion (7) adjacente à la surface frontale (5) du côté frontal.

3. Goujon selon l'une des revendications précédentes, la portion de tête (3) du goujon (1) étant formée par un goujon en acier qui est soudé par friction, avec son côté frontal dirigé à l'opposé du filetage extérieur (8), à une portion profilée en aluminium à contour extérieur hexagonal.

4. Goujon selon l'une des revendications précédentes, la portion de pied étant formée à partir d'un alliage d'aluminium 6000.

5. Ensemble de goujons destiné à la fixation d'un composant ou au raccordement de masse de composants électriques ou électroniques à une carrosserie de véhicule, ledit ensemble comprenant
un goujon (1) selon l'une des revendications 1 à 4 qui est soudé, du côté frontal (5) de la portion de pied (2), à un composant en aluminium (15) par soudage par amorçage par arc.

6. Procédé de fabrication d'un ensemble formant goujon destiné à la fixation d'un composant ou au raccordement de masse de composants électriques ou électroniques à une carrosserie de véhicule, procédé dans lequel un goujon (1) selon l'une des revendications 1 à 4 est soudé sur son côté frontal (5) à un composant en aluminium (15).

7. Procédé selon la revendication 6, le goujon étant soudé au composant en aluminium (15) par soudage par amorçage par arc.
